# EUROPEAN PATENT APPLICATION

(11) **EP 3 246 993 A1**
(43) Date of publication of application: **22.11.2017**
(21) Application number: 17020213.9
(22) Date of filing: 17.05.2017
(51) Int. Cl.: H01R 4/44, H01R 25/14, B60M 1/34, H01R 4/30, H02G 5/04, H01R 41/02, F16B 39/24, F16B 43/02

(54) **CLAMPING CONNECTOR FOR A CONDUCTOR RAIL**

(30) Priority: 19.05.2016 PL 41726816
(71) Applicant: UNILIFT Spólka z ograniczona odpowiedzialnoscia sp. k., 85-461 Bydgoszcz (PL)
(72) Inventor: Jaracz, Andrzej, 85-472 Bydgoszcz (PL)
(74) Representative: Cwiklinski, Grzegorz

(57) **Abstract**

A clamping connector for a conductor rail, with double outward bending of the ends of the conductor bands connected using a screw, characterised in that the conductor band (3) of one conductor rail segment has double bending in a U-shape and features a pass-through opening in the outer bending portion, and is contacted in two planes by the conductor band (3) of the other conductor rail segment, which has double bending in a Z-shape, also with a pass-through opening in the outer bending portion; wherein a screw (6) with a set washer (7), featuring recess corresponding to the shape of the conductor band bending portion (3), is inserted and fixed in the block (4), the shape and size of which also correspond to the shape of the bending portions of the conductor bands (3).

## Description

The invention relates to a clamping connector for a conductor rail, producing an electrical and mechanical connecting element for two conductor rail sections.

French Patent Application no. FR2420864 discloses a connector of two adjacent conductor rail segments, produced by the ends of two conductor bands: wherein one of them has double outward bending by 180° in a U-shape and features a pass-through opening towards the end; wherein the end of the other conductor rail section also has double outward bending, but the other bending portion is longitudinal relative to the conductor rail band and has a Z-like shape and features a central longitudinal cut-out at the end to insert both ends of the conductor bands under a connecting screw and fix the ends to the conductor rail body.

The solution is inconvenient as the connection may loosen due to the conductor rail connection produced along the conductor rail in which trolleys with current collectors can travel.

The European Patent Application no. EP 2028731 discloses a clamping connector between the adjacent conductor rail segments, creating two conductor band ends with outward bending by 180°: wherein the ends touch the walls of the segments; wherein the ends are tapered. There is a flat connector inserted on the ends, made of electrically-conductive material, with the shape corresponding to the edge-touching conductor ends. The connector features a rectangular central portion and longitudinal trapeze-like wings featuring wraparound flaps along the tapered wings. A permanent contact is achieved by lengthwise deformation of the centre portion with the wings being relocated towards each other and clamping the wraparound flaps at the ends of the conductor bands.

It is a significant inconvenience that a special tool is required to grab the centre portion of the fastening element and compress it longitudinally with double bending. Once the conductor rails are disassembled for repair or maintenance, the connectors are not suitable for reuse.

These inconveniences are not present in the clamping connector for a conductor rail according to this invention.

According to the invention, the essence of the solution of the clamping connector of a conductor rail is that the end of the conductor band of one conductor rail segment has double outward bending in a U-shape and features a pass-through opening on the outer bending portion that is contacted in two planes by the end of the conductor rail band of the other conductor rail segment with double outward bending in a Z-shape and features a pass-through opening in the outer bending portion. The openings are used to pass a screw with a set washer, featuring a recess corresponding to the shape of the bending portions of the conductor bands, and fixed in a block, the shape and size of which also correspond to the shape of the bending portions of the conductor bands.

It is preferable that both blocks are made of electrically non-conductive material, connected using a bar of the same material.

It is very preferable that both blocks are made of electrically non-conductive material, connected using a bar of the same material and with longitudinal grooves.

It is preferable for the conductor bands of both conductor rail segments to be bent successively and respectively by 90°, wherein the block features a pass-through opening at the angle of 45° relative to the planes of contact with the bent ends of the conductor bands.

This design ensures secure and durable connections during installation of the connection of individual conductor rail segments, wherein placement of screws at the preferable angle of 45° relative to the body plane results in longitudinal contraction of the conductor bands and, simultaneously, appropriate coupling so as to ensure good contact and high-value current flow as present in conductor rails. The connection of the blocks using bars increases the rigidity of the installed line and, simultaneously, decreases deformability during movement of trolleys with current collectors inside the conductor rail body.

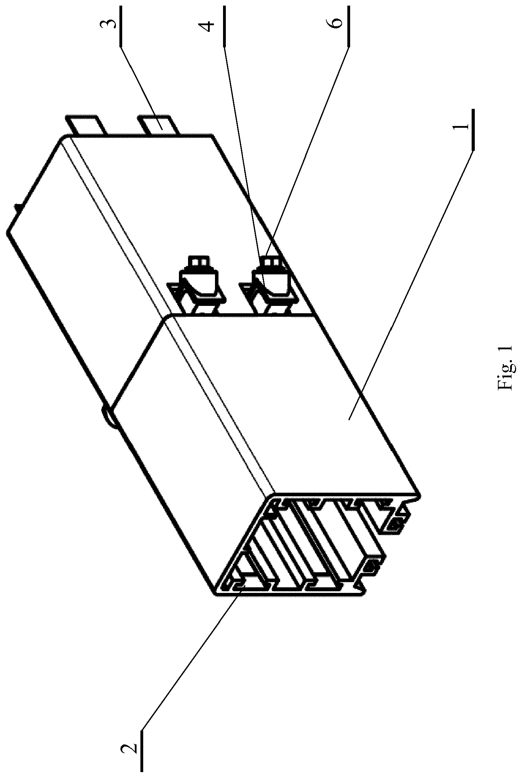

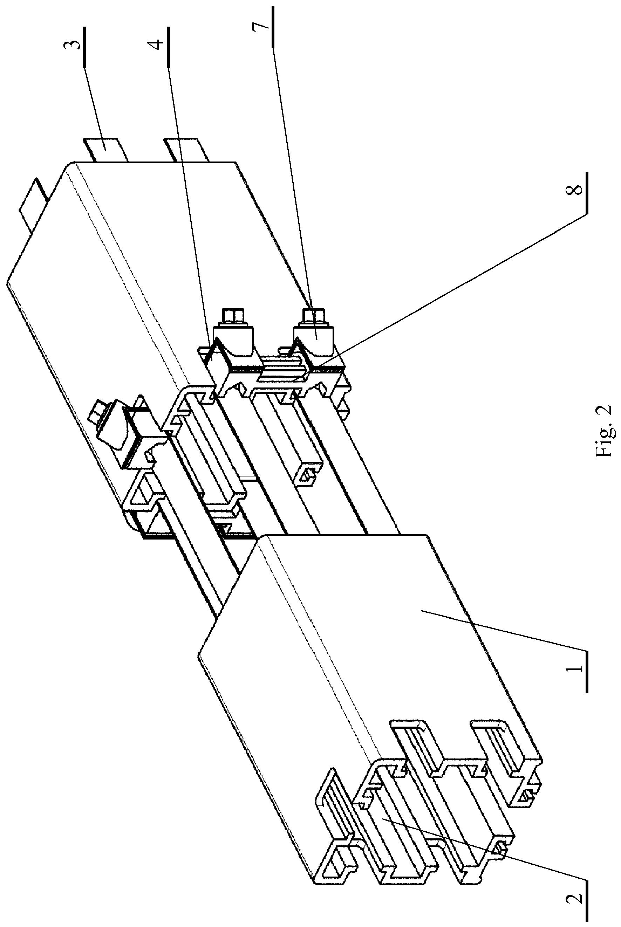

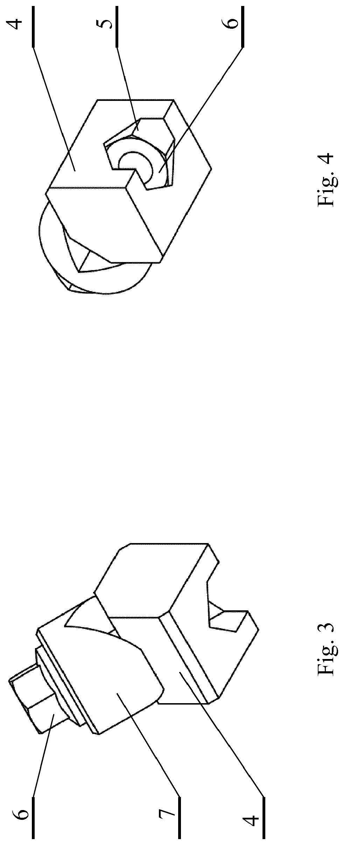

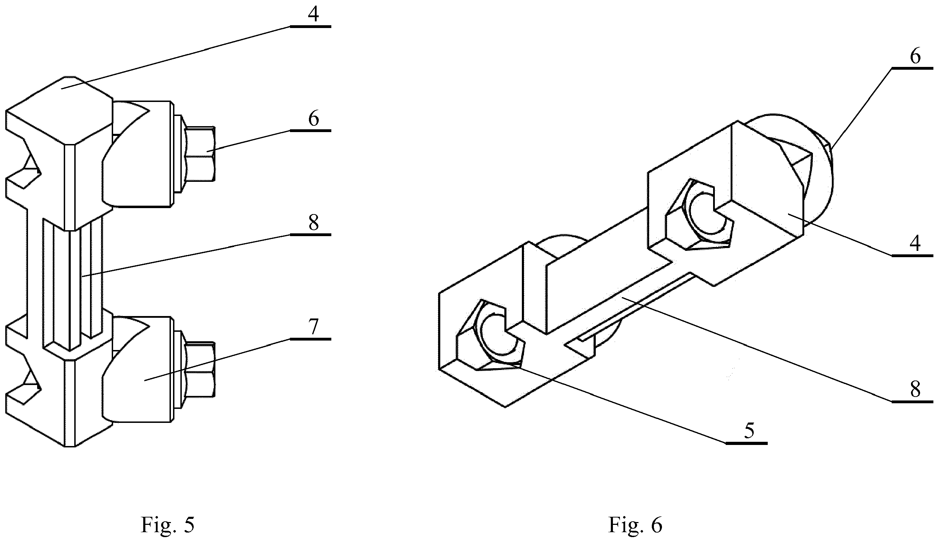

The invention is presented in the embodiment in the figure, the embodiment not being limited by the figure; wherein Fig. 1 shows two conductor rail segments connected by clamping connectors according to the inventions; Fig. 2 also shows two conductor rail segments connected by clamping connectors according to the invention, but with an unhidden portion of the body; Fig. 3 shows a block, a set washer and a screw; Fig. 4 also shows a top view of a block, a set washer and a screw; Fig. 5 shows blocks connected by a bar using set washers and screws; and Fig. 6 shows a bottom view of blocks connected using a bar, set washers and screws.

The body 1 of the conductor rail segments features internally shaped ducts 2; wherein the conductor bands 3 are located, the ends of which feature appropriate double outward bending so as to overlap and contact; wherein they encompass the block 4_with_a threaded opening 5; wherein a screw 6 and a set washer are mounted, the screw passing through the openings in the bending portions of the conductor bands 3.

## Claims

1. A clamping connector for a conductor rail, with double outward bending of the ends of the conductor bands connected using a screw, **characterised in that** the conductor band ( 3 ) of one conductor rail segment has double bending in a U-shape and features a pass-through opening in the outer bending portion, and is contacted in two planes by the conductor band ( 3 ) of the other conductor rail segment, which has double bending in a Z-shape, also with a pass-through opening in the outer bending portion; wherein a screw ( 6 ) with a set washer ( 7 ), featuring recess corresponding to the shape of the conductor band bending portion ( 3 ), is inserted and fixed in the block ( 4 ), the shape and size of which also correspond to the shape of the bending portions of the conductor bands ( 3 ).

2. A connector according to Claim 1, **characterised in that** two blocks ( 4 ) are made of electrically non-conductive material, connected using a bar ( 8 ) made of the same material.

3. A connector according to Claim 2, **characterised in that** two blocks ( 4 ) are made of electrically non-conductive materials, connected using a bar ( 8 ) made of the same material and featuring longitudinal grooves.
